# EUROPÄISCHE PATENTSCHRIFT

(11) **EP 2 515 254 B1**
(45) Veröffentlichungstag und Bekanntmachung des Hinweises auf die Patenterteilung: **21.05.2014**
(21) Anmeldenummer: 12002726.3
(22) Anmeldetag: 19.04.2012
(51) Int. Cl.: G06K 7/00, G06K 13/08

(54) **Kartenlesevorrichtung mit Schublade**
Card reader with drawer
Dispositif de lecture de carte avec tiroir

(30) Priorität: 19.04.2011 DE 102011018232
(43) Veröffentlichungstag der Anmeldung: 24.10.2012
(73) Patentinhaber: Amphenol-Tuchel Electronics GmbH, 74080 Heilbronnn (DE)
(72) Erfinder: Norridge, Marc, 74199 Untergruppenbach (DE); Rau, Michael, 74177 Bad Friedrichshall (DE); Kuntz, Julio, 74861 Neudenau (DE)
(74) Vertreter: Wendels, Stefan

(56) Entgegenhaltungen:
- EP-A2- 1 271 387
- DE-A1- 3 343 727
- DE-C1- 19 545 502

## Beschreibung

Die vorliegende Erfindung betrifft eine Kartenlesevorrichtung gemäß dem Oberbegriff von Anspruch 1.

### Technisches Gebiet

Die vorliegende Erfindung betrifft das technische Gebiet von Kartenkontaktiervorrichtungen.

Kartenkontaktiervorrichtungen werden in unterschiedlichen Anwendungen verwendet und dienen dem Zweck, dass eine Smart-Card, Chipkarte oder andere Karte mit einem elektronischen Gerät, beispielsweise einem Mobilfunktelefon, in Verbindung gebracht werden.

Hierzu gibt es im Stand der Technik unterschiedliche Kartenlesesysteme.

Im wesentlichen wird unterschieden zwischen Kontaktierungsblöcken, auf die eine Karte aufgebracht wird oder Kartenkontaktiervorrichtungen, die über einen schwenkbar und mit dem Kartenträger verrastbaren Kartenaufnahmedeckel verfügen.

Eine dritte Möglichkeit sind so genannte Kartenlesevorrichtungen im Schubladensystem.

Dabei wird in einem elektronischen Gerät eine Kartenaufnahmeschublade bereitgestellt, in die eine bestimmungsgemäße Karte des entsprechenden Kartentyps eingelegt wird und die Schublade dann von der geöffneten in ihre Schließstellung übergeführt wird, in der Regel durch Betätigen der Schublade vom Bediener Am Ende der Einschubbewegung sollte die Schublade sicher in ihrer Position gehalten werden.

Hierdurch sind im Stand der Technik unterschiedliche Verrastungsprinzipien bekannt.

Zur Entnahme der Karte wird in der Regel ein Entriegelungsmechanismus aktiviert und die Schublade aus ihrer Lesestellung in ihre Öffnungsstelle manuell überführt, entweder durch Ziehen an der Schublade oder durch einen Auswurfmechanismus. Der Verwender kann die Karte dann aus der Schublade entnehmen.

Im Stand der Technik tritt dabei das Problem auf, dass es zu Fehlern und Schäden an dem elektronischen Gerät, mit dem die Kartenlesevorrichtung verbunden ist, kommen kann, wenn die Schublade geöffnet wird, während ein Lese- oder Schreibvorgang zwischen der Karte und dem elektronischen Gerät stattfindet.

Anders ausgedrückt ist es zu vermeiden, die Karte während ihrer Lese- oder Schreibfunktion zu entnehmen.

Aufgabe der vorliegenden Erfindung ist es daher, eine Kartenlesevorrichtung bereitzustellen, die besagte Nachteile überwindet und dass vor der Entnahme der Schublade aus ihrer Leseposition der Lesevorgang unterbrochen wird.

Anspruch 1 ist gegenüber EP-A-1271387 abgegrenzt.

Diese Aufgabe wird erfindungsgemäß durch die Merkmale von Anspruch 1. Besondere Ausgestaltungen werden durch die Merkmale der Unteransprüche gelöst.

Erfindungsgemäß wird eine Kartenlesevorrichtung bereitgestellt, welche Ober eine Kartenaufnahmeschublade verfügt zum Einlegen einer Karte, insbesondere einer SIM-Karte, welche eine von Außen bedienbare und zwar mit einem Werkzeug bedienbare Kartenauswurfvorrichtung und eine elektronische Freischaltvorrichtung, die miteinander in Wechselwirkung stehen, aufweist.

Die erfindungsgemäße Kartenlesevorrichtung verfügt ganz allgemein über eine erfindungswesendiche Kartenauswurfvorrichtung einerseits und einer Freischaltvorrichtung andererseits.

Die erfindungswesentliche Kartenauswurfvorrichtung umfasst einen federgelagerten Schieber, vorzugsweise eine Druckfeder, sowie eine Rastvorrichtung.

Die Freischaltvorrichtung umfasst ebenfalls eine Rastvorrichtung und ist als so genannter "Hot Swap-Schalter" (Hot Swap-Switch) ausgebildet.

Diese dem Fachmann geläufige Bezeichnung beschreibt einen Schalter der so ausgelegt ist, dass bei Betätigen der Schublade oder beim Öffnen eines Kartenlesers sicher gestellt werden muss, dass bereits ein sehr kurzer Bedienweg, sprich eine kurze Auslenkung genügt, dass ein Schaltvorgang oder ein Signal erzeugt wird, um den noch laufenden Lesevorgang zu unterbrechen, bevor die Karte mit ihren Kontaktpads von den Lesekontakten des Kartenlesers gezogen wird und eine ungewollte Unterbrechung des Lesevorgangs stattfindet.

Die erfinungsgemäße Kartenauswurfvorrichtung ist von Außen durch eine Betätigungsöffnung bedienbar.

Im folgenden werden vorteilhafte Ausführungsformen der Erfindung beschrieben.

Die erfindungsgemäße Kartenlesevorrichtung ist mit Vorteil so ausgebildet, dass entlang einer der Schubladenseitenkanten und zwar entlang einer Schubladenseitenkante, die parallel zur Betätigungsrichtung der Schublade verläuft, die Kartenauswurfvorrichtung angeordnet ist.

Es ist weiter vorteilhaft, wenn die Kartenlesevorrichtung mit ihrer die Betätigungsöffnung in der Schubladenfront als eine im wesentliche kodierte Öffnung ausgebildet ist, vorzugsweise eine runde, ovale oder in sternförmiger Form ausgebildete Öffnung dergestalt, dass nur mit einem entsprechend korrespondierenden Werkzeug in die Öffnung eingedrungen werden kann.

Mit Vorteil weist die Kartenlesevorrichtung ferner ein U-förmiges Längsteil auf, welches als Führungsschlitten der Kartenauswurfvorrichtung dient. Besonders vorteilhaft ist es, wenn das U-förmige Längsteil so ausgebildet ist, dass sich an dessen Ende ein vorzugsweise abgestuftes Betätigungsteil der Kartenauswurfvorrichtung befindet und die Abstufung vorzugsweise als eine Stufe ausgebildet ist, so dass das Ende der Kartenauswurfvorrichtung als Schaltelement als vorzugsweise über eine Rampe betätigbares Schaltelement mit einem Schalter zusammenarbeiten kann.

In einer geeigneten Ausführungsform ist im U-förmigen Längsteil eine Feder angeordnet, die als Rücksteilfeder für die Kartenauswurfvorrichtung dient.

In einer besonders vorteilhaften Gestaltung befindet sich ferner eine Freischaltvorrichtung an der Kartenauswurfrichtung. Weiter kann die Kartenlesevorrichtung in vorteilhafter Weise ein Rastmittel aufweisen, welches durch das Ende eines Federarmes ausgebildet ist, um so eine Raststellung zu erzielen, wobei der Federarm mit Vorteil aus einem in der Kartenlesevorrichtung ausgebildeten Bodenblech gebildet wird und aus diesem herausragt und an dessen Federarmende sich das besagte Rastmittel befindet. Dieser oder ein alternativ ausgebildeter Federarm kann unmittelbar mit einem Kontakt bzw. Gegenkontakt, der im Kontaktträger angeordnet ist durch Betätigen des Federarmes in elektrischen Kontakt gebracht werden und das daraus gewinnbare Schaltsignal zur Vermeidung des Hot Swap-Effektes verwendet werden. Somit kann auf einfache Weise eine sichere und störungsfreie Kartenlesevorrichtung mit einer Kartenentnahmevorrichtung zur Verhinderung des Hot-Swap-Effektes bereit gestellt werden.

Im folgenden wird die Erfindung anhand der Figuren 1 bis 6 erläutert, die ein erstes Ausführungsbeispiel dieser Erfindung darstellt.
Fig. 1 zeigt eine Seitenansicht im gesteckten und verriegelten Zustand der Kartenlesevorrichtung;
Fig. 2 zeigt eine Seitenansicht mit einem Detail, bei dem die Kartenauswurfvorrichtung betätigt wird und die Freischaltvorrichtung aktiviert ist;
Fig. 3 zeigt eine seitliche Schnittansicht und ein Detail daraus, nach dem die Schublade der Kartenlesevorrichtung durch die Druckfeder aus dem Kartenschacht herausgeschoben wird:
Fig. 4 zeigt eine perspektivische Ansicht gemäß Fig. 1;
Fig. 5 zeigt eine perspektivische Ansicht gemäß Fig. 2;
Fig. 6 zeigt eine perspektivische Ansicht gemäß Fig. 3.

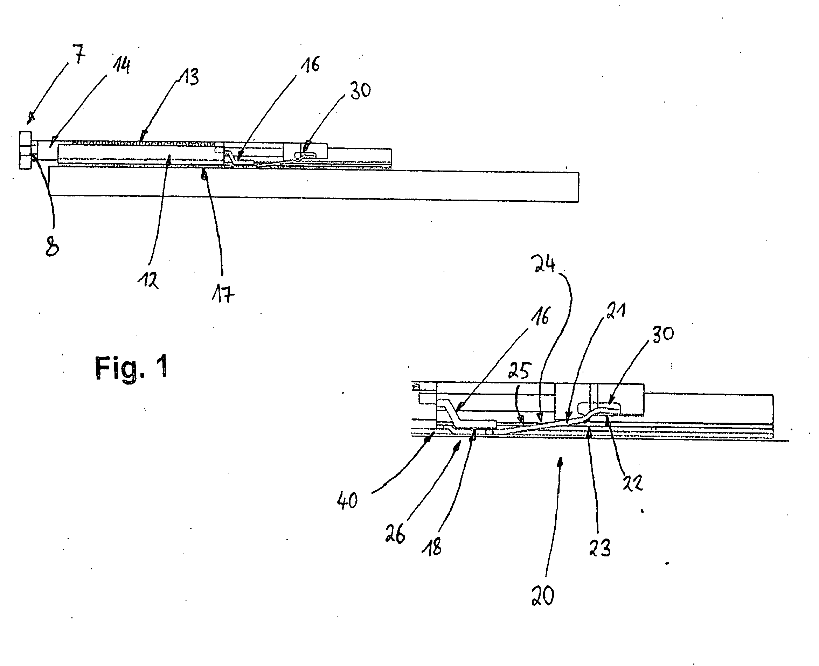

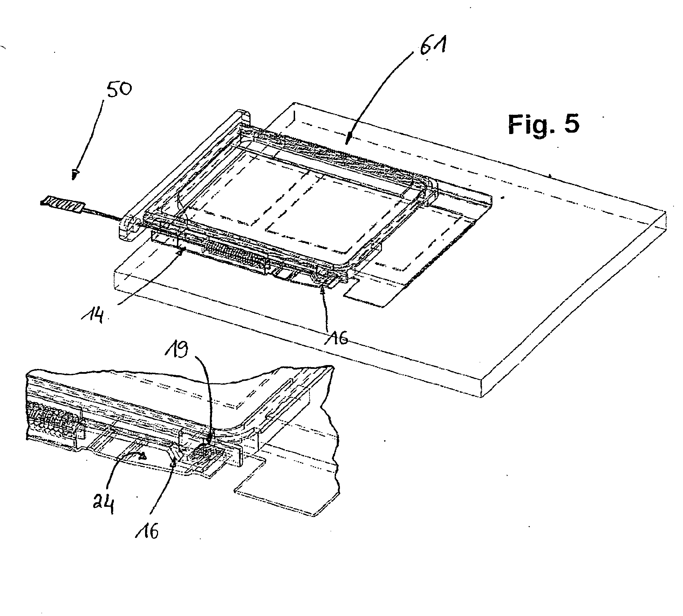

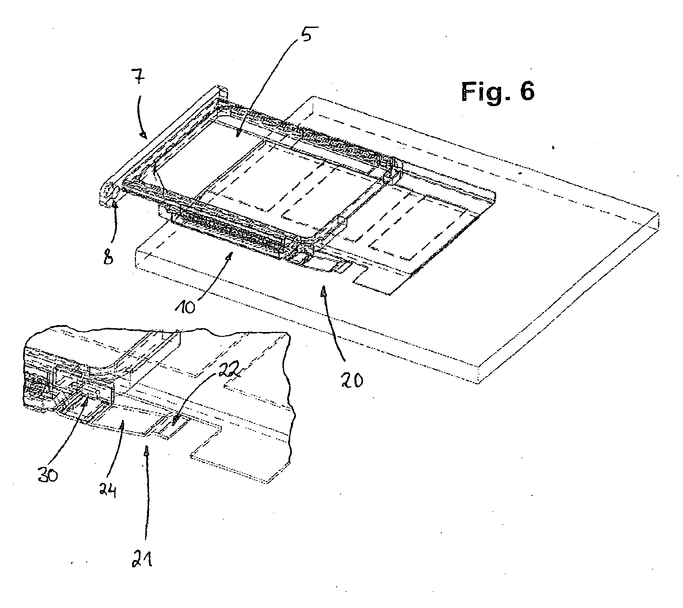

Im folgenden werden die Figuren 1 und 4 sowie die Figuren 2 und 5 und die Figuren 3 und 6 jeweils gemeinschaftlich beschrieben.

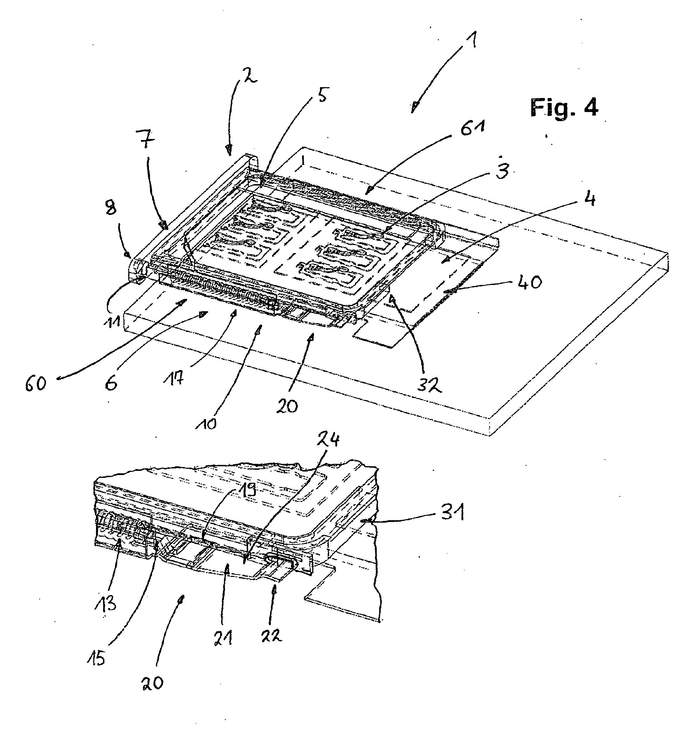

In Fig. 1 und Fig. 4 ist eine Kartenlesevorrichtung 1 mit einer erfindungsgemäßen Kartenauswurfvorrichtung 10 gezeigt. Die Kartenlesevorrichtung 1 umfasst einen Kontaktträger 4 mit Lesekontakten 3, hier 6 Lesekontakte. Die Kartenlesevorrichtung 1 umfasst ferner eine Schublade 2 zur Aufnahme einer Karte 5. Die Schublade 2 lässt sich in die Kartenlesevorrichtung 1 und zwar in die Schubladenaufnahme 6 hineinschieben und ist in der Fig. 4 bzw. in der Fig. 1 in der vollständig eingeschobenen Stellung dargestellt.

In vorteilhafter Weise ist die Kartenauswurfvorrichtung 10 seitlich entlang der Schubladenseitenkante 60 angeordnet. Die gegenüberliegende Schubladenseitenkante wird mit 61 bezeichnet. Diese beiden Kanten laufen bei eingesetzter Karte 5 parallel zu den Längsseitenkanten einer Karte, insbesondere einer SIM-Karte 5.

Die Schublade 2 verfügt über eine Schubladenfront 7. In der Schubladenfront 7 ist eine Öffnung 8, hier eine Betätigungsöffnung 8, angeordnet. Mit der Betätigungsöffnung 8 ist die Betätigungsöffnung für die Kartenauswurfvorrichtung 10 gemeint.

Diese dient dazu, dass mit einem Werkzeug 50, insbesondere einem Dom oder Draht 50, von Außen durch die Öffnung hindurch auf die Stirnseite 11 der Kartenauswurfvorrichtung 10 gedrückt werden kann.

Die Kartenauswurfvorrichtung 10 umfasst ferner ein U-förmiges Längsteil 12. Das U-förmige Längsteil kann allerdings auch in seiner Form anders ausgebildet sein. Jedenfalls ist es so auszubilden, dass eine Feder 13, vorzugsweise wie hier dargestellt eine Druckfeder 13, an dem Längsteil 12 befestigt werden kann. Das U-förmiges Längsteil 12 verfügt über ein Kopfteil 14, benachbart zur Betätigungsöffnung 8. Am gegeriübediegenden Ende des U-förmigen Längsteils 12 befindet sich eine Federaufnahme 15.

In vorteilhafter Weise wird diese durch eine Zunge, beziehungsweise eine Federzunge, ausgebildet, in die die Feder 13 mit ihrem vorderen offenen Ende eingeschoben werden kann, während sie auf der anderen Seite und zwar am Kopfteil 14, innen an diesem anliegt.

In der Fig. 1 und Fig. 4 dargestellten Stellung ist die Druckfeder minimal gespannt. Am Ende des U-förmigen Längstells 12 befindet sich ein vorzugsweise abgestuftes Betätigungsteil 16.

Die Kartenauswurfvorrichtung 10 umfasst daher das U-förmige Längsteil 12, die darin eingelegte Feder 13, das vorne angeordnete Kopfteil 14 und das auf der gegenüberliegenden Seite angeordnete Betätigungsteil 16, welches, eine Freischaltvorrichtung 20 betätigen soll. Die Freischaltvorrichtung 20 ist im einfachsten Fall eine Schaltvorrichtung, bei der sichergestellt ist, dass ein gezielter Schaltvorgang den Lesevorgang an den Lesekontakten unterbricht, bevor eine mechanische Trennung der Lesekontakte von den Kontaktfeldern der Karte erfolgt. Es muss daher eine Schaltfolge eingehalten werden, bei der zunächst ein Schaltvorgang erfolgt, mittels des Schaltvorgangs eine Freischaltung d.h. Unterbrechung des Lesevorgangs erfolgt und erst danach die Trennung der Lesekontakte der Kartenlesevorrichtung mit der Karte erfolgt.

In einer vorteilhaften Ausführungsform werden die Lesekontakte 3 aus einem Bodenblech gebildet, welches durch Freistanzen die Lesekontakte 3 ausgebildet hat, die dann aus der Ebene des Bleches 40 herausgebogen sind und zwar in Richtung der Kontaktpads einer Karte 5.

Das Blech 40 wird ganz allgemein als Träger bezeichnet und wird vorzugsweise mit Kunststoff umspritzt.

In einer vorteilhaften Ausführungsform weist das Blech 40 einen Federarm 21 auf und zwar in etwa am Rand der Schubladenseitenkante 60 der Schublade 2. Der Federarm 21 ragt ebenfalls, wie die Kontakte 3, aus der Ebene des Bleches 40 heraus und zwar in Richtung nach oben, also ebenfalls in Richtung der eingelegten Kartenebene. Am Ende des Federarmes 21 befindet sich ein Rastmittel 22. An der Unterseite des Federarms 21. oder alternativ im Bereich des Rastmittels 22, befindet sich an dessen Unterseite ein elektrischer Kontakt 23. Der Kontakt 23 ist in der Fig. 1 nur beispielhaft am vorderen Ende des Federarms 21 dargestellt. Er kann aber auf der gesamten Unterseite des Federarms 21 angeordnet sein.

Wird der Federarm 21 betätigt und zwar nach unten, wirkt er wie ein Schalter, in dem der am Federarm 21 angeordnete Kontakt 23 mit einem korrespondierenden Gegenkontakt elektrisch verbunden wird und damit ein Signal geben kann.

Dieses Signal kann als Schaltsignal für das Beenden eines Leseprozesses genutzt werden. Wird somit der Schalter 21 betätigt, kann dieser als Hot Swap-Schalter verwendet werden, wenn eine Wechselwirkung zur Betätigung mittels der Kartenauswurfvorrichtung geschafft wird, wie im nachfolgenden noch näher erläutert.

Im folgenden wird das U-förmige Längsteil 12, das Kopfteil 14 und der Betätigungsteil 16 als eine Einheit und zwar als Schieber 17 bezeichnet.

Die Schublade 2 wird im folgenden mit ihren wesentlichen Merkmalen im Hinblick auf die Kartenauswurfvorrichtung 10 und die Freischaltvorrichtung 20 mit deren Rastmittel 22 erläutert.

Im Lesezustand, somit im eingeschobenen Zustand der Schublade 2, greift das Rastmittel 22 des Federarms 21 in eine Ausnehmung 30 der Schublade 2 ein.

Da die Feder 13 etwas vorgespannt ist, wirkt die Ausnehmung 30 als Gegenrastmittel zum Rastmittel 22, womit die Stirnseite des Rastmittels 22 an der Hinterkante der Auslenkung 30 anliegt und sich damit die Schublade gegen die Federkraft daran abstützt.

Vorzugsweise ist die Ausnehmung 30 in dem Schubladenrand 31 angeordnet und zwar möglichst nahe dem hinteren Ende 32 der Schublade 2. Die Oberseite des Federarms 21 stellt eine Rampe 24 bereit. Die Rampe 24 dient als Auflauframpe für das Betätigungsteil 16 des Schiebers 17. An der Unterseite des Betätigungsteils 16 befindet sich eine Steuerfläche 18.

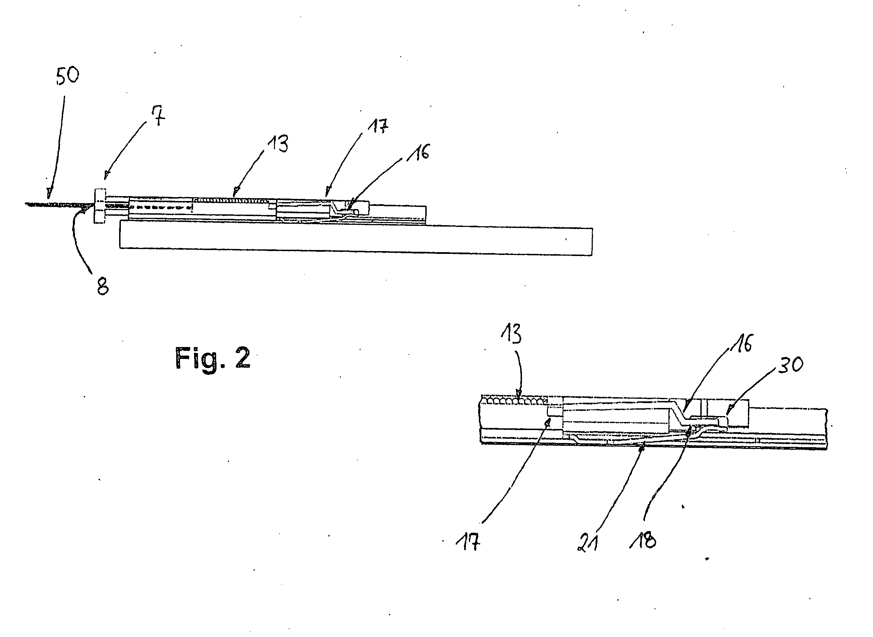

Wird der Schieber 17 betätigt, läuft die Steuerfläche 18 auf der Rampe 24 entlang und drückt, wie in Fig. 2 ersichtlich, das Federelement 21 nach unten aus der Ausnehmung 30 heraus. Das Betätigungsteil 16 wird dabei selbst von der Federkraft des Federarms 21 nach oben in die Ausnehmung 30 eingehakt.

In einer vorteilhaften Ausführungsform ist am stirnseitigen Ende des Betällgungsteils 16 und zwar im Bereich der Steuerfläche 18, eine seitliche Auskragung 19 vorhanden. Diese Auskragung 19 dient nun als Haltemittel in der Ausnehmung 30 oder allgemein als Rastmittel.

In der in Fig. 2 dargestellten Stellung ist die Druckfeder gespannt.

Lässt man nach Betätigung nun den Schieber 17 wieder los, wird die Schublade 2 in folge der Federkraft der gespannten Feder 13 aus ihrer Leseposition aus der Schubladenaufnahme 6 heraus geschoben, so dass die Karte entnommen werden kann.

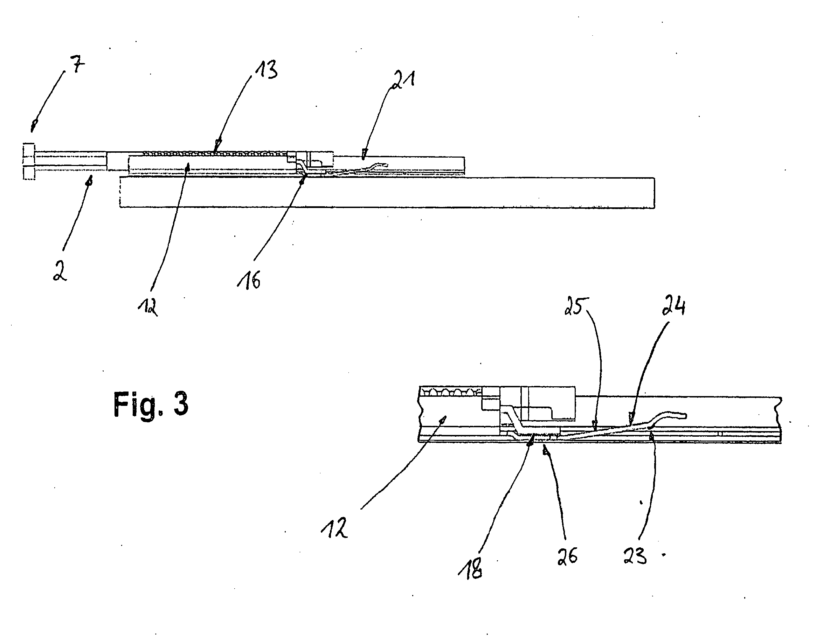

Diese Bewegung erfolgt über den Schieber 17, da dieser, bis zu der in Fig. 3 gezeigten Stellung, in der Ausnehmung 30 verhakt und erst durch hinabgleiten über die Rampe 24, kurz vor dem Ende der in Fig. 3 dargestellten Stellung, wieder nach unten aus der Ausnehmung 30 herausrutscht und dann auf der Oberseite 25 des Federarms 21 an dessen festem Ende 26 aufliegt.

Der Ablauf der Kinematik wird im folgenden anhand der Bedienung mit einem Werkzeug 50, sprich einem Dom 50, beschrieben.

Ein Bediener schiebt einen Dorn 50 durch die Öffnung 8 und zwar die Betätigungsöffnung 8 in bzw. durch die Schubladefront 7 hindurch und zwar auf das Kopfteil 14 des Schiebers 17 auf. Drückt er nun den Schieber 17 von der in Fig. 1 und 4 dargestellten Stellung in Richtung der Freischaltvorrichtung 20, so wird die Feder 13 gespannt Der Betätiger muss den Schieber 17 soweit betätigen, dass der Betätigungsteil 16 auf der Rampe 24 schräg nach oben in Richtung dem freien Ende des Federarms 21 und zwar bis zu dessen Rastmittel 22 aufläuft und dieses betätigt und zwar derart, dass es aus der Ausnehmung 30 entrastet wird und damit die Schublade freigibt.

Durch Freigabe der Schublade kann diese, bedingt durch den Schieber 17 bzw. das Betätigungsteil 16 mit dessen Auskragung 19, die nun in die Ausnehmung 30 hineingerutscht ist und als Mitnehmer wirkt, aus der Schubladenaufnahme 6 herausbefördert werden.

Dies geschieht automatisch infolge der Rückstellungskraft der Feder 13.

Lässt also der Bediener den Dom 50 wieder los, wird die Schublade 2 aus der Schubladenaufnahme 6 Ober den Mitnehmer und zwar die Auskragung 19 herausbefördert.

Dabei gleitet die Auskragung 19 und damit das Betätigungsteil 16 mit seiner Steuerfläche 18 über die schräge Rampe 24 zurück und zwar so lange, bis das Betätigungsteil 16 mit seiner Auskragung 19 nach unten aus der Ausnehmung 30 herausrutschen kann.

Dies ist etwa auf der halben Strecke zwischen der Fig. 2 dargestellten Stellung und der in Fig. 3 dargestellten Stellung. Hierdurch wird auch verhindert, dass die Schublade 2 aus der Schubladenaufnahme 6 herausschießt, sondern sanft aus dieser herausgleitet.

Der Vorgang ist, wie den Fig. 1 bis 6 zu entnehmen ist, reversibel, so dass nach Entnahme der Karte aus der Schublade 2 oder Tauschen einer Karte, die Schublade 2 wieder in ihre Lesestellung übergeführt werden kann.

Hierbei wird die Schublade am Ende ihres Einschubweges und zwar in der Lesestellung, wieder mit ihrer Ausnehmung 30 am Rastmittel 22 des Federarmes 21 verrastet und sicher in ihrer Lesestellung gehalten.

Bei der zuvor beschriebenen Kinematik wird der Kontakt 23 an der Unterseite des Federarmes 21 auch beim Einschieben der Schublade 2 in die Schubladenaufnahme 6 wieder betätigt, so dass ein erneutes Signal erfolgen kann, welches dazu genutzt werden kann, dass ein darauf folgender Lesevorgang begonnen werden kann. Somit wird in die Kartenauswurfvorrichtung und Freischaltvorrichtung eine Hot Swap-Funktion integriert, die sicherstellt, dass beim Einschieben der Schublade 2 in die Kartenlesevorrichtung 1 und bei der Entnahme der Schublade 2 aus der Kartenlesevorrichtung 1 jeweils der Federarm 21 als Hot Swap-Schalter fungiert.

In einer alternativen Ausführungsform kann auch ein weiterer Federarm unmittelbar am Ende des Federarmes 21 als Gegenkontakt angeordnet sein, um die Hot Swap-Funktion sicherzustellen.

### Bezugszeichenliste

### Kartenlesevorrichtung mit Schublade

- 1: Kartenlesevorrichtung
- 2: Schublade
- 3: Lesekontakte
- 4: Kontaktträger
- 5: Karte (SIM-Karte)
- 6: Schubladenaufnahme
- 7: Schubladenfront
- 8: Betätigungsöffnung

- 10: Kartenauswurfvorrichtung

- 12: U-förmiges Längsteil
- 13: Feder
- 14: Kopfteil
- 15: Federaufnahme
- 16: Betätigungsteil
- 17: Schieber
- 18: Steuerfläche
- 19: Auskragung
- 20: Freischaltvorrichtung
- 21: Federarm
- 22: Rastmittel
- 23: Kontakt
- 24: Rampe
- 25: Oberseite
- 26: festes Ende
- 30: Ausnehmung
- 31: Rand
- 32: hinteres Ende der Schublade

- 40: Blech

- 50: Dorn/Draht

- 60: Schubladenseitenkante
- 61: Schubladenseitenkante

## Patentansprüche

1. Kartenlesevorrichtung (1) umfassend eine mit einer Rastausnehmung (30) ausgebildete verrastbare Schublade (2) zur Aufnahme einer Karte (5), wobei die Kartenlesevorrichtung (1) ein Gegenrastmittel für die Rastausnehmung (30) der Schublade (2) aufweist und zwar einen in der Kartenlesevorrichtung (1) ausgebildeten Federarm (21) mit einem am Federarm angeordneten Rastmittel (22) zum Eingriff in die Rastausnehmung (30) der Schublade (2), wobei die Kartenlesevorrichtung (1) ferner Ober eine von außen betätigbare Kartenauswurfvorrichtung (10) mit einem Betätigungsteil (16) verfügt und das Betätigungsteil (16) eine Auskragung (19) aufweist, die ausgebildet ist zum Entriegeln des Rastmittels (22) aus der Rastausnehmung (30) beim Betätigen der Kartenauswurfirorrichtung (10) durch das Betätigungsteil (16) **dadurch gekennzeichnet, dass** die Kartenauswurfvorrichtung (10) entlang einer der Schubladenseitenkanten (60, 61) angeordnet ist und zwar entlang einer Schubladenseitenkante (60, 61), die parallel zur Betätigungsrichtung der Schublade verläuft.

2. Kartenlesevorrichtung (1) gemäß Anspruch 1, **dadurch gekennzeichnet, dass** die Schublade (2) über eine Schubladenfront (7) verfügt, in der eine Betätigungsöffnung (8) angeordnet ist und die Kartenauswurfvorrichtung (10) ferner eine durch die Betätigungsöffnung (8) mittels eines Werkzeuges (50) betätigbare Kartenauswurfvorrichtung (10) mit einer Feder (13) und einem Betätigungsteil (16) bereitstellt und die Kartenauswurfvorrichtung (10) mittels des Werkzeuges (50) entgegen der Federkraft der Feder (13) verschiebbar ist und sich durch Betätigen das Rastmittel (22) löst und damit die Schublade (2) aus ihrer Raststellung befreit und dabei mit seiner am Betätigungsteil (16) angeordneten Auskragung (19) in die Ausnehrnung (30) eingreift.

3. Kartenlesevorrichtung (1) gemäß einem oder mehreren der vorhergehenden Ansprüche, **dadurch gekennzeichnet, dass** die Betätigungsöffnung (8) in der Schubladenfront (7) als eine im wesentliche kodierte Öffnung ausgebildet ist, vorzugsweise eine runde, ovale oder in sternförmiger Form ausgebildete Öffnung darstellt.

4. Kartenlesevorrichtung (1) gemäß einem oder mehreren der vorhergehenden Ansprüche, **dadurch gekennzeichnet, dass** die Kartenauswurfvorrichtung (10) ferner ein U-förmiges Längsteil (12) umfasst.

5. Kartenlesevorrichtung (1) nach Anspruch 4, **dadurch gekennzeichnet, dass** das U-förmige Längsteil (12) so ausgebildet ist, dass sich an dessen Ende ein vorzugsweise abgestuftes Betätigungsteil (16) befindet.

6. Kartenlesevorrichtung (1) gemäß einem oder mehreren der vorhergehenden Ansprüche, **dadurch gekennzeichnet, dass** im U-förmigen Längsteil (12) eine Feder (13) eimgebracht ist.

7. Kartenlesevorrichtung (1) gemäß einem oder mehreren der vorhergehenden Ansprüche, **dadurch gekennzeichnet, dass** ferner eine Freischaltvorrichtung (20) an der Kartenauswurfrichtung (10) vorgesehen ist.

8. Kartenlesevorrichtung (1) gemäß einem oder mehreren der vorhergehenden Ansprüche, **dadurch gekennzeichnet, dass** das Rastmittel (22) durch das Ende eines Federarmes (21) ausgebildet ist.

9. Kartenlesevorrichtung (1) gemäß einem oder mehreren der vorhergehenden Ansprüche, **dadurch gekennzeichnet, dass** der Federarm (21) aus einem in der Kartenlesevorrichtung (1) ausgebildeten Bodenblech (40) herausragt und an dessen Federarmende sich das Rastmittel (22) befindet.

10. Kartenlesevorrichtung (1) gemäß einem oder mehreren der vorhergehenden Ansprüche, dadurch gekenntzeichnet, dass der Federarm (21) mit einem Kontakt (23) der im Kontaktträger angeordnet ist durch Betätigen des Federarmes (21) in elektrischen Kontakt gebracht werden kann und das daraus gewinnbare Schaltsignal zur Vermeidung des Hot Swap-Effektes verwendet werden kann.

## Claims

1. Card-reading apparatus (1) comprising a latchable tray (2), which is formed with a latching recess (30), for holding a card (5), wherein the card-reading apparatus (1) has a mating latching means for the latching recess (30) of the tray (2), specifically a spring arm (21) which is formed in the card-reading apparatus (1) and has a latching means (22), which is arranged on the spring arm, for engaging into the latching recess (30) in the tray (2), wherein the card-reading apparatus (1) also has a card-ejecting apparatus (10) which can be operated from the outside and has an operating part (16), and the operating part (16) has a projection (19) which is designed for unlocking the latching means (22) from the latching recess (30) when the card-ejecting apparatus (10) is operated by the operating part (16), **characterized in that** the card-ejecting apparatus (10) is arranged along one of the tray side edges (60, 61), specifically along a tray side edge (60, 61) which runs parallel to the operating direction of the tray.

2. Card-reading apparatus (1) according to Claim 1, **characterized in that** the tray (2) has a tray front (7) in which an operating opening (8) is arranged, and the card-ejecting apparatus (10) further provides a card-ejecting apparatus (10) which can be operated through the operating opening (8) by means of a tool (50) and has a spring (13) and an operating part (16), and the card-ejecting apparatus (10) can be displaced against the spring force of the spring (13) by means of the tool (50), and the latching means (22) is released by operation, and therefore the tray (2) is freed from its latching position and, in the process, engages into the recess (30) by way of its projection (19) which is arranged on the operating part (16).

3. Card-reading apparatus (1) according to one or both of the preceding claims, **characterized in that** the operating opening (8) in the tray front (7) is designed as a substantially encoded opening, preferably constitutes a round, oval or star-shaped opening.

4. Card-reading apparatus (1) according to one or more of the preceding claims, **characterized in that** the card-ejecting apparatus (10) further comprises a U-shaped longitudinal part (12).

5. Card-reading apparatus (1) according to Claim 4. **characterized in that** the U-shaped longitudinal part (12) is designed such that a preferably stepped operating part (16) is located at the end of said longitudinal part.

6. Card-reading apparatus (1) according to one or more of the preceding claims, **characterized in that** a spring (13) is introduced into the U-shaped longitudinal part (12).

7. Card-reading apparatus (1) according to one or more of the preceding claims, **characterized in that** an activation apparatus (20) is further provided on the card-ejecting apparatus (10).

8. Card-reading apparatus (1) according to one or more of the preceding claims, **characterized in that** the latching means (22) is formed by the end of a spring arm (21).

9. Card-reading apparatus (1) according to one or more of the preceding claims, **characterized in that** the spring arm (21) projects out of a bottom plate (40) which is formed in the card-reading apparatus (1) and the latching means (22) is located at the spring arm end of said spring arm.

10. Card-reading apparatus (1) according to one or more of the preceding claims, **characterized in that** the spring arm (21) can be moved into electrical contact with a contact (23), which is arranged in the contact support, by operating the spring arm (21), and the switching signal which can be obtained as a result can be used to avoid the hot-swap effect.

## Revendications

1. Dispositif de lecture de carte (1) comprenant un tiroir (2) encliquetable réalisé avec un évidement d'encliquetage (30) pour recevoir une carte (5), le dispositif de lecture de carte (1) présentant un moyen d'encliquetage conjugué pour l'évidement d'encliquetage (30) du tiroir (2), et spécifiquement un bras de ressort (21) réalisé dans le dispositif de lecture de carte (1) avec un moyen d'encliquetage (22) disposé sur le bras de ressort pour l'engagement dans l'évidement d'encliquetage (30) du tiroir (2), le dispositif de lecture de carte (1) disposant en outre d'un dispositif de décharge de carte (10) pouvant être actionné depuis l'extérieur avec une partie d'actionnement (16) et la partie d'actionnement (16) présentant une saillie (19) qui est réalisée pour déverrouiller le moyen d'encliquetage (22) hors de l'évidement d'encliquetage (30) lors de l'actionnement du dispositif de décharge de carte (10) par la partie d'actionnement (16), **caractérisé en ce que** le dispositif de décharge de carte (10) est disposé le long de l'un des bords latéraux du tiroir (60, 61) et spécifiquement le long d'un bord latéral du tiroir (60, 61) qui s'étend parallèlement à la direction d'actionnement du tiroir.

2. Dispositif de lecture de carte (1) selon la revendication 1, **caractérisé en ce que** le tiroir (2) dispose d'une partie avant de tiroir (7) dans laquelle est disposée une ouverture d'actionnement (8) et le dispositif de décharge de carte (10) fournit en outre un dispositif de décharge de carte (10) pouvant être actionné par l'ouverture d'actionnement (8) au moyen d'un outil (50), avec un ressort (13) et une partie d'actionnement (16), et le dispositif de décharge de carte (10) peut être coulissé au moyen de l'outil (50) à l'encontre de la force de ressort du ressort (13) et son actionnement desserre le moyen d'encliquetage (22), et libère ainsi le tiroir (2) de sa position d'encliquetage et vient en l'occurrence avec sa saillie (19) disposée sur la partie d'actionnement (16) en prise dans l'évidement (30).

3. Dispositif de lecture de carte (1) selon l'une ou plusieurs des revendications précédentes, **caractérisé en ce que** l'ouverture d'actionnement (8) est réalisée dans la partie avant du tiroir (7) sous forme d'ouverture essentiellement codée, de préférence constitue une ouverture ronde, ovale ou de forme stellaire.

4. Dispositif de lecture de carte (1) selon l'une ou plusieurs des revendications précédentes, **caractérisé en ce que** le dispositif de décharge de carte (10) comprend en outre une partie longitudinale en forme de U (12).

5. Dispositif de lecture de carte (1) selon la revendication 4, **caractérisé en ce que** la partie longitudinale (12) en forme de U est réalisée de telle sorte qu'une partie d'actionnement (16) de préférence de manière étagée se trouve à son extrémité.

6. Dispositif de lecture de carte (1) selon l'une ou plusieurs des revendications précédentes, **caractérisé en ce qu'**un ressort (13) est pratiqué dans la partie longitudinale (12) en forme de U.

7. Dispositif de lecture de carte (1) selon l'une ou plusieurs des revendications précédentes, **caractérisé en ce qu'**un dispositif de commutation libre (20) est en outre prévu au niveau du dispositif de décharge de carte (10).

8. Dispositif de lecture de carte (1) selon l'une ou plusieurs des revendications précédentes, **caractérisé en ce que** le moyen d'encliquetage (22) est réalisé par l'extrémité d'un bras de ressort (21).

9. Dispositif de lecture de carte (1) selon l'une ou plusieurs des revendications précédentes, **caractérisé en ce que** le bras de ressort (21) fait saillie hors d'une tôle de fond (40) réalisée dans le dispositif de lecture de carte (1) et le moyen d'encliquetage (22) se trouve au niveau de son extrémité de bras de ressort.

10. Dispositif de lecture de carte (1) selon l'une ou plusieurs des revendications précédentes, **caractérisé en ce que** le bras de ressort (21) peut être amené en contact électrique avec un contact (23) disposé dans le support de contact par l'actionnement du bras de ressort (21), et le signal de commutation pouvant être ainsi obtenu peut être utilisé pour éviter l'effet de remplacement à chaud (Hot Swap).
